# EUROPEAN PATENT SPECIFICATION

(11) **EP 1 758 805 B1**
(45) Date of publication and mention of the grant of the patent: **31.12.2008**
(21) Application number: 05769626.2
(22) Date of filing: 21.06.2005
(51) Int. Cl.: B65G 49/04

(54) **TRANSLATORY MANIPULATOR, PROCESSING LINE AND METHOD OF PROCESSING WORK PIECES**
TRANSLATORISCHER MANIPULATOR, PRODUKTIONSLINIE UND VERFAHREN ZUR WERKSTÜCKVERARBEITUNG
MANIPULATEUR DE TRANSLATION, CHAINE DE TRAITEMENT ET PROCEDE DE TRAITEMENT DE PIECES A USINER

(30) Priority: 23.06.2004 DE 102004030377
(43) Date of publication of application: 07.03.2007
(73) Proprietor: ATOTECH Deutschland GmbH, 10553 Berlin (DE)
(72) Inventor: SCHNEIDER, Reinhard, 12207 Berlin (DE)
(74) Representative: Patentanwälte Bressel und Partner
(86) International application number: PCT/EP2005/006864
(87) International publication number: WO 2006/000439

(56) References cited:
- DE-A1- 2 156 232
- DE-A1- 19 641 524
- FR-A- 2 060 046

## Description

The present invention relates to a translatory manipulator for work pieces to be processed in processing stations according to the preamble of claim 1, more specifically to a transport carriage for conveying the work pieces from one processing station to another in a vertical processing line with processing baths as well as for immersing the work pieces into the processing baths of the stations and for upwardly withdrawing them out of the baths. The invention also relates to a processing line as described by the preamble of claim 20 and a method of processing work pieces according to the preamble of claim 25.

In industry, a wide variety of conveying tasks are to be performed. Where movement sequences are repetitive and can be planned well in advance, expensive robots capable of executing any movement within a range of action determined by its construction are seldom used. In these cases, conveyor systems having specialized application are utilized. In the paint industry for example, dip plants are utilized in which the goods are conveyed from one dip tank to another with the goods being hung on flight bars. Conveyor carriages are used for this purpose. The movement of the goods consists in a downward movement for immersion of said goods into a dip tank and of an upward movement for withdrawal thereof as well as in a traveling movement in the forward and backward direction to the various tanks or to a loading or discharge station. If the dip plant is an electrophoretic dip-painting plant, power supply via the flight bars is realized in addition to the carrying, conveying, raising and lowering functions of the conveyor systems. The parts are often hung from racks which in turn are suspended on flight bars that are equipped for transport with lateral receiving retainers. For transport, the conveyor carriages grasp said flight bars at the receiving retainers.

A conveyor system in which individual work pieces are loosely piled up on racks and are immersed from the top into a dip tank by means of a conveyor device is known from WO 98/44170 A2. The conveyor device consists of a transport rail on which several slides having drives move horizontally. Vertically displaceable hoist racks and step racks are guided in the slides. Said racks substantially consist of a frame with two U-shaped rails for engagement of driven rolls that are carried on the slide. Horizontal carrier arms for what are termed trays on which the work pieces are laid down are connected to said rails. The advantage of this device is that a large quantity of pieces can be conveyed simultaneously. The disadvantage thereof however is that the conveying capacity of each transport carriage is predetermined and can, if at all, only be increased at considerable expense.

This system serves for conveying and processing small pieces. If large work pieces are to be conveyed, the flight bars or the trays may be eliminated. In this case, the work pieces are fastened to racks which are grasped by means of holders mounted to the conveyor system and are brought to the several dip tanks and away therefrom.

Such an equipment is disclosed in DE 86 34 279 U1. It serves to convey work pieces between at least two processing stations, which are disposed in a row, and to raise und lower the work pieces once the device has been situated at a processing station. For raising and lowering the work pieces, the equipment comprises two transportable conveying devices and a hoisting device which are guided along carriers which serve as travel rails. Another translatory manipulator is described in DE 2156 232 A1, which discloses the features of the preamble of claim 1.

Printed circuit boards are for example fastened to racks that in turn are fastened all together on a flight bar. In this manner, 15 - 20 boards may for example be arranged side by side and up to four boards above each other in a matrix fashion on a flight bar. All the boards are processed simultaneously and are in principle subjected to the same processing conditions. However, due to their different positions in-the processing station, the conditions vary slightly, with for example different flow conditions for boards mounted in the lower and in the upper region of a flight bar or with different electric potentials during electrochemical treatment on boards disposed in proximity to the contact surfaces of the flight bar and on boards located farther away therefrom, said different conditions or different electric potentials resulting in board quality fluctuations.

The advantage of the processing systems mentioned herein above is that they are highly specialized and producible at a low cost. The disadvantage thereof however is that said conveyor systems are difficult to adapt to other circumstances such as to the need to increase the capacity.

Thus, the problem underlying the invention is to indicate a conveyor system for performing predetermined tasks that is producible at a low cost and may readily be adapted to changing circumstances without having to redesign the processing line. It is another object of the invention to achieve, as far as practicable, constant quality for all the work pieces.

This problem is solved by the translatory manipulator of patent claim 1, by the processing line of claim 20 and by the method of claim 25. Preferred embodiments of the invention are recited in the subordinate claims.

As far as herein below and in the claims a traveling element, a hoisting element, a gripper element and the like or the plural thereof are recited, this shall be understood to both include one traveling element or a plurality of traveling elements, respectively, one hoisting element or a plurality of hoisting elements, respectively, one gripper element or a plurality of gripper elements, respectively, and the like. Therefore in these cases the indefinite article "a", "an" and the definite article "the" may likewise be understood to denote the plural thereof and *vice versa.*

The device of the invention more specifically serves to convey work pieces from one processing station to another in a vertical conveyorized processing line with processing baths, more specifically in a dip-painting line, a phosphating or an electroplating line, as well as to immerse the work pieces into the processing baths of the stations and to upwardly withdraw them out of the baths. In the fields of the art mentioned, such type manipulators are termed transport carriages. Transport carriages are more specifically employed to convey work pieces, such as pieces that are to be electroplated, to stations in a row of processing stations (arranged one behind the other) in a predetermined order, to deposit them there, with the work pieces being brought into contact with the processing medium (liquid, gas, *e.g*. air), provided there, to pick them up again after processing is completed and to convey them to another station. Such type processing stations may more specifically be processing tanks filled with a processing liquid such as a liquid cleanser, a liquid activator, a liquid conditioner, a liquid etchant, a metallizing liquid, a passivating liquid and a coating liquid. The processing stations may also serve for drying or for loading or discharging.

The manipulator of the invention may for example be erected above the tanks of a processing line. Thanks to the modular structure of the manipulator, maximum flexibility is achieved in terms of increasing or reducing the size of the line when the capacity thereof is increased or reduced.

In accordance with the invention, the manipulators have a modular structure. For this purpose, the manipulator comprises
a) at least one traveling element that is moveable along a row of at least two processing stations for the work pieces, for example along a guide, more specifically along a travel rail,
b) at least one hoisting element as well as
c) at least one gripper element for grasping the work pieces, said gripper element being mounted to the hoisting elements.

In accordance with the invention, the hoisting elements and the gripper elements mounted thereon are extendable in a modular fashion so that the hoisting elements may extend over at least two rows (arranged side by side) of processing stations, once the hoisting elements and gripper elements have been extended. Extension is to be understood as duplication of the respective elements. The work pieces held in the stations will then be respectively grasped by the gripper elements in the stations. The work pieces will be raised and lowered by means of the hoisting elements.

As a result, a line that comprises such type manipulators may be readily adapted to the changing desires of a user of the line or to the need to subsequently vary the conveying capacity. This may be achieved by widening of the manipulator in a pattern prescribed by the dimensions of the work pieces by inserting extension modules for the hoisting element such as traverse member modules and by adding further gripper elements when additional rows of processing stations are provided for example. Preferably, a maximum of nine additional extension modules and a corresponding number of additional gripper elements are inserted. As a rule, the pattern is dictated by the width of the carrier racks for the work pieces or by the work pieces themselves. Each additional extension module inserted has the width mentioned. If the need arises, a plurality of standardized extension modules, each of which corresponds to the width of an additional row of processing stations, may also be inserted.

Accordingly, the manipulator of the invention comprises the following individual modules:
a) traveling modules (elements):
   Said traveling modules preferably receive the entire drive mechanism. Preferably, one traveling module is provided on each long side of one or a plurality of processing stations. A hoisting module that spans the rows of processing stations is preferably provided between two traveling modules. A traveling element may more specifically be formed by a supporting frame having a base leg as well as at least two traveling wheels carried on the base leg.
b) hoisting modules (elements):
   The traveling modules hold the hoisting modules. The hoisting modules in turn hold the gripper modules. The hoisting modules are formed from at least one hoisting unit held by at least one traverse member or, alternatively, from at least one traverse member that is held by at least one hoisting unit. In the first case, the gripper modules are held directly by the hoisting units. In this case, the traverse members are preferably stationary (not vertically moveable) and connected to the traveling modules. In the last case, the hoisting units are connected to the traveling modules and carry vertically moveable traverse members. Said traverse members in turn retain the gripper modules. The traverse members can be formed from traverse member modules (for example to lengthen existing traverse members). Both stationary and vertically moveable traverse members may consist of corresponding modules. If the hoisting units held on the stationary traverse members and respectively holding the gripper modules, are utilized, several work pieces can be conveyed separately in a line comprising a plurality of rows of processing stations, be immersed into the stations and vertically withdrawn therefrom. This construction is more complicated than constructions with vertically moveable traverse members and with gripper modules directly attached thereon. With this last variant however, individual pieces cannot be processed separately.

   The hoisting modules are preferably held by two traveling modules. The hoisting units may more specifically be formed from a pneumatically or hydraulically operated cylinder and piston hoisting system, a motor-operated lifting spindle or a motor-operated lifting belt.
c) gripper modules (elements):
   The gripper modules may be fastened either to a vertically moveable traverse member or to a stationary traverse member of the hoisting module. A gripper module may more specifically be formed from two clamping yokes that laterally grasp the work pieces, are pivotally carried on respective pivots and may be actuated by axially displacing a respective one of the legs of the clamping yokes. Alternatively, the gripper module may also simply be a hook or a dovetail if the item to be grasped comprises suited engagement means. The vertically moveable and stationary traverse members of a hoisting element in a manipulator of the invention preferably extend across at least one row, more preferably at least two rows, of processing stations, *i.e*., substantially perpendicularly to the direction of motion of the work pieces extending along the rows of processing stations. At least one gripper element, possibly at least one hoisting unit retaining one gripper element, as well as, at need, at least one traverse member module are associated with each row of processing stations, a plurality of traverse member modules forming one traverse member when assembled. The gripper element permits to convey a respective one of the work pieces processed in a row of processing stations or an assembled group of work pieces. Preferably, a maximum of ten traverse member modules or, alternatively, traverse members having a corresponding length with associated gripper elements as well as at need hoisting units for the gripper elements are arranged in one hoisting element. There may also be provided two traveling elements and on the two traveling elements one hoisting element with two hoisting units retaining vertically moveable traverse members. The traveling elements are preferably moveable on the two outer long sides of M rows of processing stations disposed side by side (where M is an integer greater than zero). The traveling elements carry the hoisting elements that extend across the rows of processing stations and the hoisting elements in turn carry the gripper elements. Alternatively, further traveling elements may be provided between the several rows of processing stations in order to increase internal stability of the manipulator.

The modular structure offers a great variety of advantages: if production capacity of a line is to be increased by adding additional processing stations to the sides thereof, for example dip stations with corresponding dip tanks, or by adding additional rows of processing stations, this may be achieved by inserting additional traverse member modules into the hoisting elements and gripper modules and, if need be, additional hoisting units for the gripper modules. Thus, the capacity of the line may be selectively designed in quite small steps without having to modify the basic structure of the line. Such type capacity extensions may also be realized at a later stage, when the line has already been installed.

Each time the line is extended by one additional row of processing stations, further traverse member modules and corresponding gripper modules as well as at need hoisting units are added on. If the number of rows of processing stations is to be reduced, these modules are dismounted accordingly.

The traveling elements may more specifically travel on conveying paths comprising tracks such as travel rails that are mounted parallel to the outer rows of processing stations. These paths for horizontal transport comprise a fixed spacing in the pattern of the rows of processing stations. They are disposed above or beside these rows. The width of a track consisting for example of two neighbouring transport rails for a manipulator to slide there along may be chosen when the processing line is first designed so that subsequent changes will not require the travel rails to be rearranged if the rails required for subsequent extensions of the line are already mounted. If the line has only one row of tanks, the track width is devised so as to correspond to the width of the final structure as planned. The required widening of the manipulator's chassis may at first also be obtained by low cost spacer modules that are later replaced by extension modules having hoisting units.

If the capacity of the line is to be further increased, for example to ten traverse members and gripper modules and, at need, hoisting units, and if the travel rails are mounted to the shop's ceiling, there may be provided a third travel rail and an additional traveling module as well as at need a third hoisting unit (if the hoisting units are disposed on the traveling modules and hold vertically moveable traverse members in the hoisting modules). It is however also possible to displace conveying path carriers mounted to the ceiling to conform to the new width when the line is extended at a later stage.

Alternatively, when the line is installed for the first time, travel rails may be mounted to the shop's floor so as to run directly alongside the rows of processing stations. Processing stations that are to be additionally installed later on may then be erected beside the already mounted travel rails without having to dismount already laid travel rails so that after extension this travel rail runs between two rows of processing stations. In this case, at least one further travel rail should be laid on that side of the rows of processing stations on which no travel rail has been installed as yet. In this case, the manipulator comprises traveling elements that are moveable along all of these travel rails and hold the hoisting elements. In principle, there may also be provided tracks between all the rows of processing stations and thereon moveable traveling modules with hoisting modules provided therein between.

Instead of the aforementioned travel rails, there may also be utilized other equivalent means to effect translatory motion of the traveling elements and to transfer load thereon.

Thanks to the modular structure of the invention, the manipulator may be readily mounted. Further, the manipulator may be readily adapted to extended capacity by accordingly adding additional modules or to reduced capacity by accordingly dismounting existing modules. In the last case, the shop floor space thus gained can be used for other applications.

In a particularly preferred embodiment of the invention, the traveling elements, the hoisting elements, more specifically the traverse members and hoisting units of the hoisting elements, and the gripper elements are built according to the same principle in a manipulator. Fast and simple connection of the several elements to one another is thus ensured so that capacity may be readily extended. The modular structure also leads to fewer spare parts since fewer different parts are used. This makes it easier to replace several modules for purposes of maintenance or for repair.

According to an embodiment of the invention it is possible to have, between the traveling elements, for example but one hoisting gear and one gripper element for grasping and securely holding the work pieces. Preferably, a hoisting element is held between two traveling elements. This permits to have a manipulator of a stable construction with the load being transferred on a basis through the two traveling elements to which the hoisting elements are fastened.

In a particularly advantageous embodiment of the invention, a traveling/hoisting module is formed by integrating a hoisting unit into a traveling element. As a result, but the traverse members of the hoisting element as well as gripper modules for the work pieces are needed in addition to the traveling/hoisting module, the traverse members being connected with the hoisting gears in the traveling/hoisting modules.

The processing line of the invention includes
a) at least one row of N processing stations, where N is an integer greater than zero and
b) one or a plurality of translatory manipulators of the invention that extend across the rows of stations extending in the direction of transport of the work pieces.

The processing stations are preferably designed in such a manner that one single work piece, for example an electric circuit board, may be processed in each of them. In conventional lines for processing electric circuit boards, the discrete work pieces are preferably fastened to racks that in turn are all fastened together on a flight bar. In this manner, 15 - 20 boards may for example be arranged side by side and up to four boards above each other in a matrix fashion on a flight bar. Due to the different positions of the pieces in a processing station, the processing conditions to which they are subjected vary slightly. This leads to board quality fluctuations. With the embodiment of the invention, in which every single piece is processed in a separate processing station, the processing conditions may be accurately adjusted for each piece since all of the pieces are processed under the same conditions.

The processing line may more specifically comprise M rows of N processing stations each, where N and M are integers greater than zero, M being 1, 2, 3, 4, 5, 6, 7, 8, 9, 10 for example. The manipulator extends across the M rows of processing stations. It is preferred that in each processing station, but one single work is processed. As there are provided M rows of processing stations, M work pieces may be processed simultaneously. The work pieces are supplied one after the other to the individual processing stations in the rows of processing stations comprising N stations each, are thereby brought into contact with processing liquid or also dried in the individual processing stations. Since the processing stations are also meant to include the loading and discharging stations, the work pieces in the rows are accordingly also supplied and loaded by a feeder or discharged into a discharger.

For this purpose, the processing stations may substantially have the size of the work pieces. Since, at a given point of time, only one work piece is processed in one processing tank, the interior volume of the tank needs not be substantially larger than the very piece itself. Accordingly, the volume of the tank and, as a result thereof, the volume of the processing liquid in said tank is minimized. Another substantial advantage of the present invention is that the processing conditions may be accurately adjusted for each circuit board since each board is processed singly in a processing station so that all of the boards are in principle processed under the same conditions. The disadvantage of known processing lines in which a plurality of boards are fastened to a rack and conveyed into a processing station, which resides in that, for example as a result of the size of the racks and processing stations, different processing conditions prevail at different locations in the station and for different boards mounted on a rack, is eliminated. Such different processing conditions may for example be different flow conditions of the processing liquid for boards mounted in the lower and in the upper portion of the rack or different electric potentials during electrochemical treatment on boards disposed in proximity to the contact surfaces of the rack and on boards located farther away therefrom. Thanks to the reduced size of the processing tank, it is much easier to reproduce the operating conditions in the processing stations than in conventional lines. For example, flow profiles are easier to optimize selectively than with a tank the inner volume of which is significantly larger than the board.

Accordingly, a plurality of identical tanks is preferably arranged in a line across the direction of travel of such a line. Each tank is designed for one work piece. When viewed in the direction of travel, a plurality of work pieces arranged one behind the other may also be simultaneously introduced into the tanks. For this purpose, a plurality of processing tanks intended to be used for the same kind of processing may be arranged one behind the other. In this case, a plurality of gripper elements, and at need the hoist units carrying the gripper elements, are provided one behind the other in the direction of travel. If the work pieces are boards, a plurality of pieces may be processed together "in a stack" in one tank. In the latter case, the processing line is more efficiently employed. But constant board quality is only achieved if each board is equipped with its own independent supply source and control of the processing parameters. A plurality of work pieces in one row will have to be processed simultaneously in particular if, with respect to the cycle time of the line, the processing times to be respected in certain baths are long so that a plurality of processing stations are needed for one processing step in such baths for this very reason.

For loading, the work pieces may be fastened to racks and the racks to a flight bar. In this case, the flight bar, which is loaded with the racks and the pieces, is grasped by the manipulator and laid down into the individual processing stations. In this case, only a few gripper elements and at need hoisting units are required on the traverse members of the hoisting elements. For this reason it will not be required that as many gripper elements as rows of processing stations be provided. Alternatively, the pieces may also be fastened directly to a flight bar for loading. In this case again, the flight bar, which is loaded with the pieces, is grasped by the manipulator and laid down into the several processing stations. Again in this case, only a few gripper elements and at need hoisting units are needed on the traverse members since only one flight bar has to be grasped. In one embodiment, the gripper elements for flight bars may be carrier elements that are mounted laterally on the traveling elements, the carrier elements being held on the traveling elements by hoisting units (hoisting elements) and grasping the flight bars from underneath to raise and convey them. In another alternative implementation, the pieces may be directly grasped for loading by the gripper elements of the manipulator and be laid down in a processing station each. As compared to the aforementioned variants, this last variant offers substantial advantages since the flight bars would have to be laid down during production breaks or after a production shift for holding the pieces and, if applicable, the racks. Special expensive lay-down stations and programs to retrieve the flight bars would be necessary for this purpose. This variant dispenses therewith. Moreover, individual work pieces can be processed separately and need not be subjected to exactly the same processing program as the other pieces held by that flight bar. For separate processing may become necessary when it is found out that one piece does not meet the desired specifications and has to undergo a re-work process. Moreover, the various pieces may in this case be processed at a different rhythm in the various rows.

As direct grasping of the pieces by the manipulator is advantageous, racks for holding the work pieces are arranged in the processing stations. They may for example be hinged frames which receive the pieces and hold them in the station. Hence, said racks can consist of two frames hinged to each other at one edge, with the frame being fastened by its hinge in a processing tank to the bottom thereof. When the piece enters the line, the frame is open and once the piece has entered it closes to hold it fast. For a simple chemical treatment or for rinsing by immersion in a liquid, the pieces may also be held in the processing tank by means of simple, e.g., U-shaped guide members into which the work pieces are introduced when they are being immersed in the bath.

The various modules of the manipulator may be connected together through suited connecting elements. Since the manipulator preferably is constructed with standardized units in an assembly of prefabricated parts (modular structure), the connecting elements are also standardized. For this purpose, suited connector pieces are provided for connection to the respective one of the appropriate locations on the modules. A plurality of traveling modules, hoisting modules and gripper modules are preferably joined together by releasable connecting elements such as flanges or flange plates. Preferably, the manipulator is designed in such a manner that up to ten processing stations disposed side by side may be spanned by the traverse member modules of the hoisting module. More specifically, the modules may be mounted by means of screw connections or of tube fittings for example. This provides flexibility in extending or reducing the line. More specifically, the traveling modules may be connected to the hoisting modules through releasable connecting elements. The same applies to traverse member modules that are to be assembled if one does not use lengthened traverse members to extend the size of the manipulator. In case the traveling modules are connected to hoisting elements on either side, they comprise connecting elements on both sides.

The connection of modules having an additional hoisting and traveling module with flanges may be configured so as to prevent redundancy in determination of the load distribution. This may be realized by rubber buffers or other mobile connection techniques for example. This allows even small level differences between the tracks, which in this case extend at least three-fold in parallel, to be accommodated.

Electrical leads for actuating and supplying electrically operated drive units, inclusive of actuators for the hoisting elements and for the gripper elements, on the traveling elements, the hoisting elements and/or the gripper elements are connected together between the elements mentioned preferably via releasable plug contacts so that fast and easy mounting or dismounting is made possible. The plug contacts are preferably built according to the same design principle and are each positioned at the same location on the traveling, hoisting and gripper elements. More specifically, the plug contacts may be plugs and sockets or terminal blocks.

The control units needed for controlling the drives and the power supply of the drives may also be constructed in modular form. The various drive modules may be connected together through standardized plugs or terminal blocks of a standardized configuration. For this purpose, switch cabinets and the control units may be provided on the traveling and/or hoisting elements. The switch cabinets and the control units are preferably also built according to the same design principle and positioned at the same location on the elements.

Electric power is preferably supplied to the electrically operated drive units on the traveling elements through sliding contacts and current collectors or through trailing cables and trailing hoses or drag chains. Sliding contacts are preferred.

In connection for example with radio networks following the transmission standard 802.11 b or g, a wiring always adapted to the specific space conditions for controlling the hoisting and traveling units may be completely eliminated and in connection with the sliding contacts power supply via cables may also be dispensed with. If compressed air is required for the hoisting or gripper elements, said compressed air may also be generated directly on the traveling element or on the hoisting elements by small compressors.

In the event, the control signal is transmitted through a radio network, a traveling and/or hoisting module comprises a transmitter, a receiver and the necessary limit switches and control units. The other modules may join in the connection to the transmitter via plug connections. Alternatively, as a special case, each traveling and/or hoisting module is given its own transmitter and receiver.

To track the travel of the manipulator a laser-based displacement measurement instrument may also be mounted on a row of tanks for each transport carriage for example. Displacement commands (forward - back - brake - stop) and hoisting commands (up - down - brake - stop) may for example be transmitted by a stationary computer to the manipulator via the radio network and confirmation of the execution instruction may be transmitted back. Moreover, conventional power supply devices with power transmission and control commands via trailing cables or for example via drag chains may also be realized.

Generally, the drive units for the travel motion of the manipulator are gear motors that drive the axes of traveling wheels of the traveling elements either through direct coupling or through pulleys for toothed belt and toothed belts that are solidly connected fo the traveling wheels or to the axes of the traveling wheels. Chains or gearwheels and other elements known from the drive technique may also be used. For fast motion, it may be necessary to drive all the traveling wheels. Power may for example also be simply transmitted to a second traveling wheel by means of toothed belts.

In addition to an electric motor drive for traveling and hoisting, other drive techniques such as hydraulic or pneumatic lifting and rotary cylinders may be utilized, more specifically when used in an explosion proof environment. Likewise, the travel motion of the manipulator may be generated by a stationary drive by means of traction ropes.

In a special embodiment, the traveling modules or the traveling/hoisting modules are guided so rigidly on either side on the travel rails by upper and lower traveling wheels and by additional lateral supporting rollers that they may dispense with additional stiffening (traverse) members between the traveling modules and the hoisting units. The two hoisting units or traveling/hoisting modules are then only connected to the vertically movable traverse members to which the gripper elements are mounted.

In the processing line, sensors for detecting the respective operating conditions in the processing stations may further be associated with the processing stations. The sensors may be configured to be measuring sensors for determining the following parameters: temperature of the processing medium contained in the processing stations, flow velocity of the processing medium contained in the processing stations, electric current density between a work piece placed in a processing station and counter-electrodes also placed in the processing station, fill level of the processing liquid contained in a processing station and concentration of chemical compounds in a processing liquid contained in a processing station. Acquiring the concentrations of the chemical compounds not only comprises determining the concentrations of the respective bath constituents but also determining the concentration of noxious constituents generated during bath operation. Therefore, the sensors also permit to determine the decomposition rate of the desired constituents in this case. The sensors on the processing stations may also transmit data to the controllers via a radio network.

The manipulator of the invention may more specifically be utilized in processing lines serving to process electric circuit boards. Circuit boards more specifically are printed circuit boards and other semi-finished products serving to accommodate electronic components or to connect electronic components in another manner, such as hybrid circuits, multichip modules, foil keypads, electric foil connectors and other circuit carriers. The circuit boards may be dielectric boards clad with a copper foil on the outer side thereof and with or without inner copper layers or boards without external electrically conductive layers. In the latter case, electrically conductive layers, more specifically copper layers, may be deposited onto the boards. The boards may more specifically be provided in the form of foils.

For processing/manufacturing circuit boards by electroplating, the processing stations in the processing line are configured to be stations for wet-chemical treatment. Other processing stations may also be configured to be drying stations, loading and discharging stations.

Any type of electroplating treatment may be envisaged for wet-chemical treatment as long as it includes both rinsing, pretreatment, more specifically swelling, cleaning, etching, conditioning, activating and reducing, and metal deposition, which includes both chemical, meaning electroless, methods using a reducing agent and cementation deposition methods (through charge transfer reaction), and electrochemical deposition by which metal is deposited under the action of an external current source or metal surfaces on the surfaces of the circuit boards are processed electrochemically by another method such as electrochemical etching of metal.

The invention will be better understood upon reading the following description of the Figs.
- **Fig. 1**: is a side view of a traveling module of the invention;
- **Fig. 2**: is a front view of the module of **Fig. 1****;**
- **Fig. 3**: is a front view of a complete manipulator of the invention with traveling module above a processing station;
- **Fig. 4**: shows details of the gripper only shown schematically in **Fig. 3****;**
- **Fig. 5**: is a side view of a traveling/hoisting module;
- **Fig. 6**: is a front view of the traveling/hoisting module of **Fig. 5****;**
- **Fig. 7**: is a front view of a complete manipulator of the invention with traveling/hoisting module above a processing station;
- **Fig. 8**: shows a manipulator with traveling/hoisting module extended in a modular fashion so as to extend over three rows of processing stations;
- **Fig. 9**: is a side view of a manipulator of the invention above a row of processing stations with traveling/hoisting module.

In the Figs. like numerals are used to denote like elements.

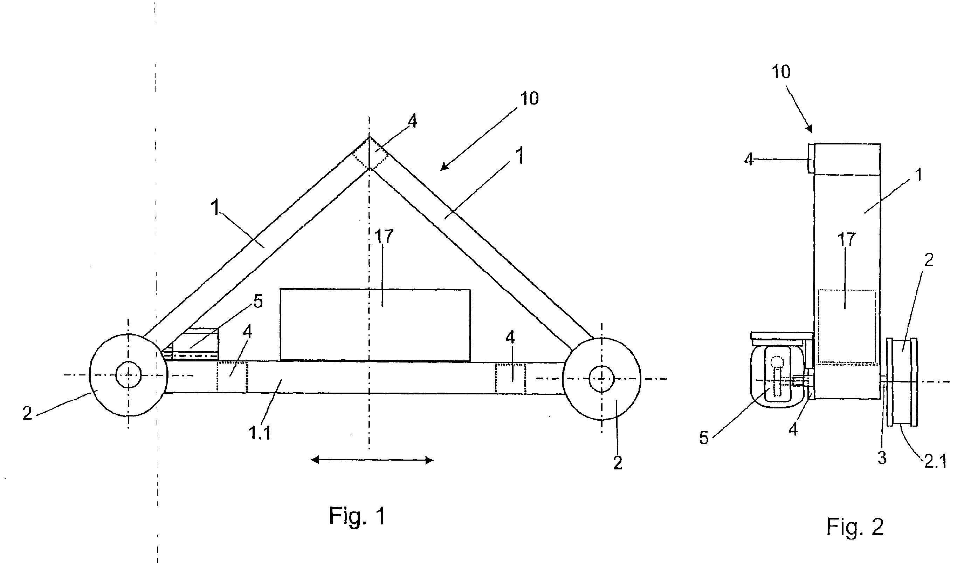

**Fig. 1** is a side view illustrating a traveling module **10** of the invention. The traveling module substantially consists of a supporting frame **1** consisting for example of square tubes that are provided with an environmental protective coating or of square tubes made of stainless steel. In a preferred embodiment, the square tubes are welded together.

For modular connection of the traveling module to the traverse members, flange plates **4** are provided for screwing the traverse members to the traveling module **10.** The flange plates may be provided on only one side (as shown in **Fig. 2**) in order to fasten traverse members to only one side of the traveling module, or on both sides of the supporting frame **1** in order to build up the manipulator from the traveling module shown on either side thereof.

On the base leg **1.1** (lower square tube of the supporting frame) of the supporting frame **1,** two traveling wheels **2** are rotatably mounted on bearings that have not been illustrated herein and by means of which the traveling module may be displaced in the directions indicated by a double-headed arrow in **Fig. 1****.** Further, a for example electric travel gear motor **5** is flanged to the supporting frame. In this example, the drive shaft of the gear motor is solidly connected to the axis **3** (see **Fig. 2**) of the one traveling wheel. The other traveling wheel is also solidly fastened to an axis. Current keys and screw connections may for example be used for this purpose.

Beside the drive by means of electric gear motors **5** as described herein, other drives are possible that have not been illustrated herein such as compressed-air driven motors, for example for operation in a potentially explosive environment, and stationary drive units that drive the traveling module via traction ropes or chains.

To control the drive motor **5** and other aggregates mounted to the hoisting modules, the traverse members and the gripper modules, control units that are accommodated in the switch cabinet **17** are used. Electrical connections and connections for alternative energies as well as connections for control signals are established via readily releasable plug connectors or clamp connectors that have not been illustrated herein, so that changes may be made on the connecting lines without having to make noteworthy changes in the installation and without having to redesign it. The plug connectors, clamp connectors and the like that are needed on the traveling module may also be accommodated in the switch cabinet **17.**

**Fig. 2** shows the traveling module **10** in a view horizontally rotated 90° as compared to the illustration as shown in **Fig. 1****.** The travel motion of the module **10** is accordingly performed into the plane of the drawing and out of said plane. The traveling wheels **2** are equipped with a recessed tread **2.1** for easy guidance on a travel rail.

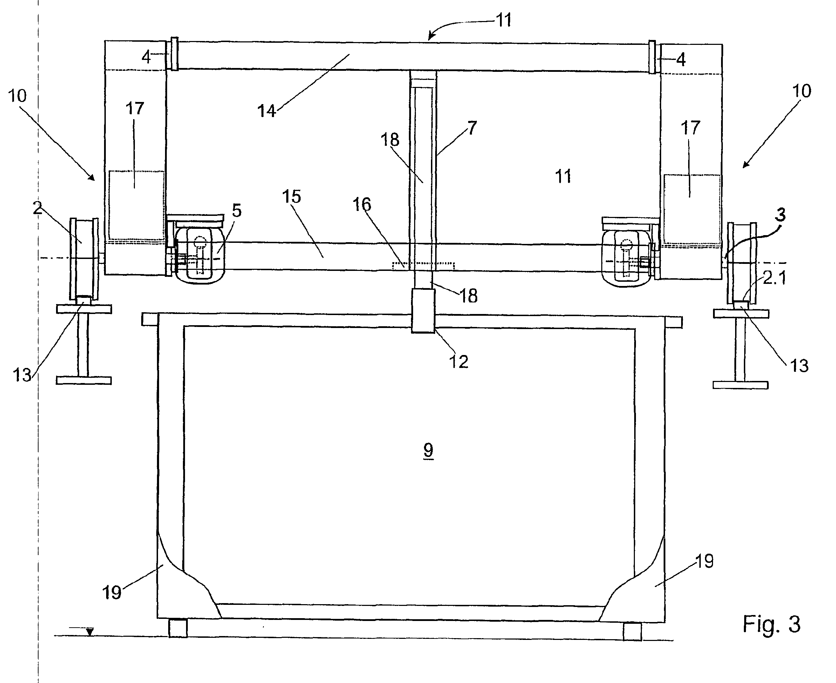

**Fig. 3** shows two traveling elements **10,** each having one travel gear motor and traveling wheels **2** through the treads **2.1** of which the traveling wheels transmit the load onto the travel rails **13.** The travel rails are disposed on either side of a processing tank **19.**

The stationary traverse members **14, 15** of the hoisting module **11** shown in **Fig. 3** are flanged to the flange plates **4.** In this example, each hoisting module consists of three traverse members, namely an upper member **14** and two lower traverse members **15,** to either end of which flange plates **4** are mounted for solid connection to the traveling modules **10.** The flange plates for the lower members **15** are not shown in **Fig. 3****.** In the center of the lower traverse members, there is a connecting means **16** made of a flat material for holding the traverse members **15** together in the pre-assembled state.

The connecting means **16** concurrently forms the lower fastening means of the hoisting unit configured to be a lifting cylinder **7.** At the upper end of the lifting cylinder, the hoisting unit is directly fastened to the upper traverse member **14.** A piston rod **18** reciprocates in the lifting cylinder. A gripper **12** is fastened to the lower end of the piston rod, said gripper grasping the work piece **9** by opening and closing a clamping mechanism that has not been illustrated herein and again releasing said work piece after transport. In **Fig. 3****,** the work piece is accommodated in a processing tank **19.**

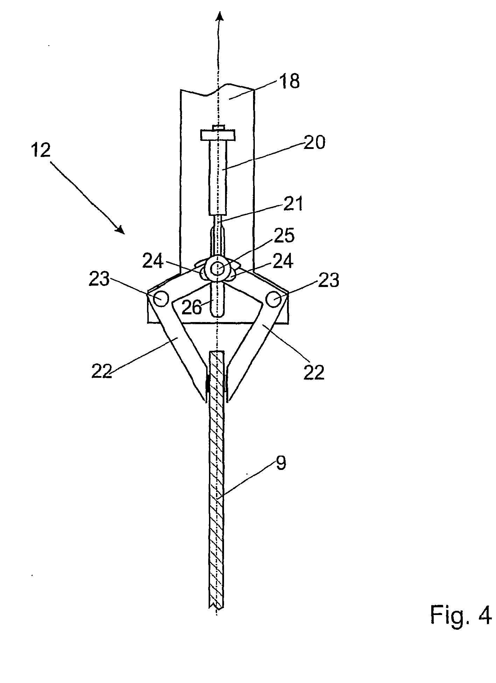

**Fig. 4** shows in detail an example of a gripper element **12.** Here, said gripper element is a gripper that is actuated by a small compressed-air cylinder **20.** The supply lines for compressed air and the valves needed for control have not been illustrated. The gripper consists of at least two clamping yokes **22** that are rotatably carried on the lifting rod **18** by means of the clamping yoke axes **23.** The actuation rod **21** of the compressed-air cylinder **20** engages with a guide bolt **25** into the long holes **24** provided on the clamping yokes and in the guiding long hole **26** provided on the lifting rod **18.** The guiding long hole **26** on the lifting rod **18** prevents the actuation rod **21** from swerving when the gripper is actuated. As a result, the work piece **9** could be clamped off center. To fasten the work piece by clamping, the actuation rod **21** is pulled upward in the direction of the arrow, thereby rotating the lower ends of the clamping yokes **22** inward. As a result, the clamping yokes move toward each other and the work piece is grasped as with tongs. In order to prevent the work pieces from oscillating or swaying during transport, the lifting rod needs to be guided in a manner similar to that of an air lifting piston for example.

The sequence of a transport procedure of a work piece from one processing station to the next is as follows (see **Figs. 3** and **4**):

The transport carriage, which consists of at least one hoisting module and one traveling module as well as of at least one gripper module, travels to the processing station from which the flat work piece **9** is to be withdrawn. The lifting rod **18** is thereby at least partially engaged into the lifting cylinder **7** in order not to get into touching contact with the work pieces being treated in the other tanks as it passes by. After braking and accurate positioning of the chassis at the processing station **19,** the lifting rod **18** completely extends out of the lifting cylinder until it reaches the lower position. The gripper mechanism at the lower end of the lifting rod **18** is thereby open. Once the lifting rod has reached the lower position, the gripper mechanism closes, thereby clamping the work piece **9.** Next, the lifting rod travels to its upper position, thereby pulling the work piece out of the processing station **19.** Once the upper lifting position is reached, the carriage travels to the next processing station. Upon assuming the right stop position, the lifting rod **18** is lowered to the lower position. The work piece is thereby held or grasped by the holding devices provided for in the processing tank so that the gripper mechanism **12** may be opened again. Then, the lifting rod is at least partially raised again, and the next transport procedure may be started, beginning with a travel motion.

All the movements are monitored by means of suited sensors (not shown in the Figs.). As long as the previous transport motion has not been completed and released by the sensors, the next (partial) transport step will not be performed. Generally, the movement of the work piece is controlled by means of a computer (*e.g*., a personal computer having suited input and output cards as well as suited software). The personal computer control may possibly be assisted by a stored program control (SPS) for command output to the control units and for constant sensor interrogation. Since all the modules of the transport system are of the same design, the sensors, the control units and the software needed for control may also consist of always the same component parts.

The modular structure cannot be realized with the drive technique described above only. Electric drives in the form of magnetic coils may for example be used instead of the pneumatically or hydraulically actuated hoisting units. In this case, a magnetic coil replaces the lifting cylinder and a magnetic rod movably carried therein replaces the lifting piston. Moreover, conventional drives that generate hoisting by means of rotary movement and chains or belts may also be utilized. The work piece is hereby lowered by the weight of the lifting device and raised by winding up a chain or a belt in a manner similar to that of a lifting block.

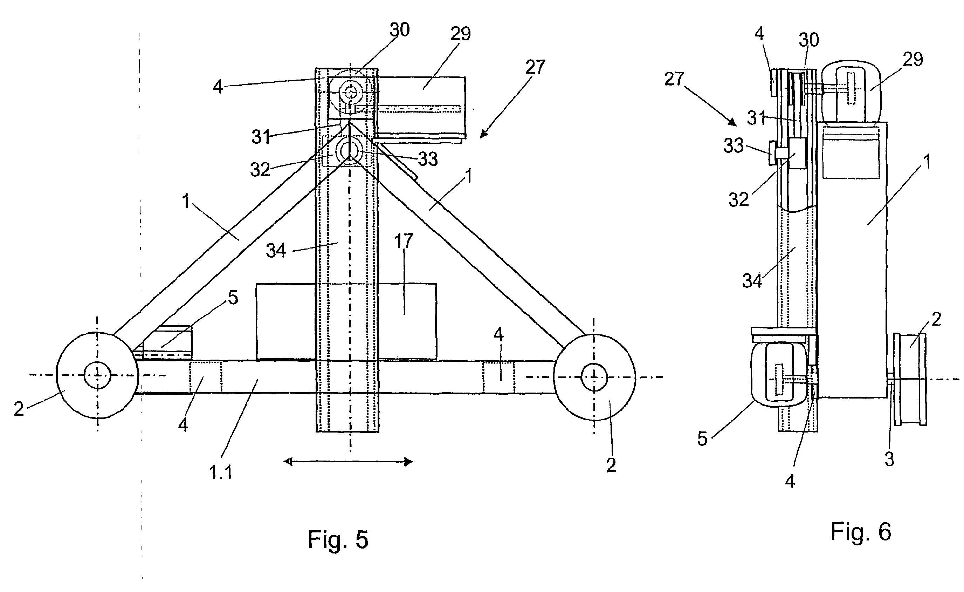

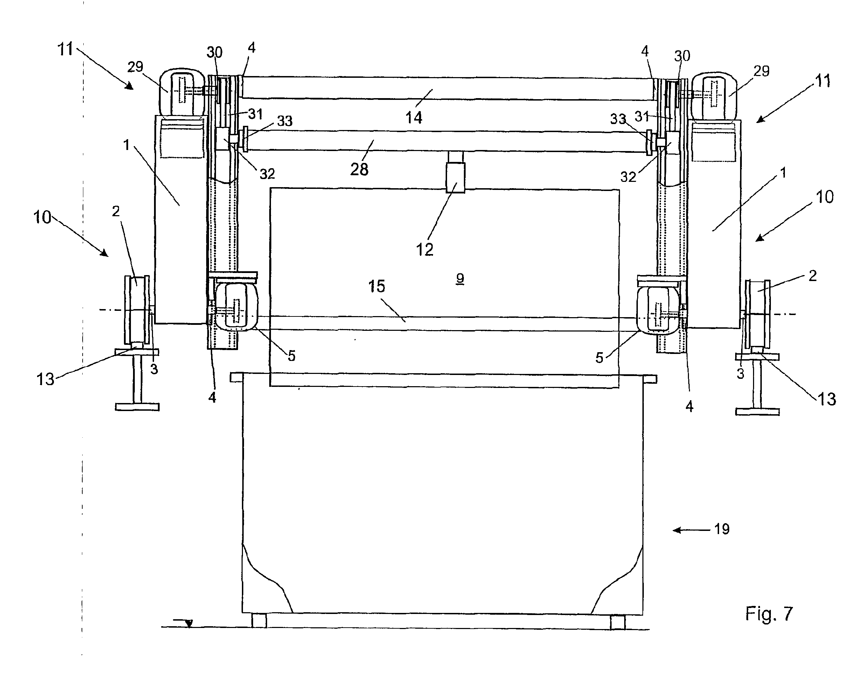

**Fig. 5** is a side view of a traveling/hoisting module **27** with a supporting frame **1.** In this example, a hoisting unit is additionally fastened to the traveling module of **Fig. 2****.** For this purpose, a guide rail **34** is fastened in the center of the supporting frame **1** of the traveling element. A guide shoe **32** is movably carried in the U-shaped guide rail. This guide shoe is moved up and down by the hoisting motor **29.** For this purpose, the motor drives the lifting spindle **30** by means of which the lifting belt **31** may be wound up onto said lifting spindle or unwound therefrom. Downward movement thereby occurs by means of gravity to the extent the lifting belt **31** is unwound from the lifting spindle **30.** In the upper region of the supporting frame **1** of the traveling/hoisting module **27** as well as at the base leg **1.1,** there are shown flange plates **4** for fastening traverse members. A connecting means **33** is mounted to the guide shoe **32.** As shown in **Fig. 7****,** the vertically movable traverse member **28** is fastened to this connecting means.

**Fig. 6** is a front view of the traveling/hoisting module **27** described above. For increased clarity, the guide rail **34** is cut away in the center in the upper region so that the lifting spindle **30,** the lifting belt **31** and the guide shoe **32** are clearly visible.

**Fig. 7** shows a completely assembled transport carriage in a view like the traveling/hoisting module shown in **Fig. 6****.** In the lower region of **Fig. 7** there is located the bath tank **19.** Above said tank, there is illustrated the work piece 9 that is almost completely withdrawn. It is held by the gripper element **12** on the vertically movable traverse member **28** of the hoisting element.

At the connection **33,** the traverse member **28** is fastened to the hoisting unit such as by screws and is solidly connected there to the guide shoe **32.** The drives of the hoisting motors **29** causes the lifting belts **31** to wind in synchronism on both sides onto the lifting spindles **30** and pulls the guide shoes of the two hoisting/traveling modules upward. As a result, the work piece **9** is conveyed up- or downward through the gripper element **12.**

**Fig. 7** shows the traveling elements **10** and the hoisting element **11,** with the hoisting unit of the hoisting element being integrated in the hoisting/traveling module. It further illustrates stiffening members **14, 15** that provide greater stability to the transport carriage. Said traverse members are also solidly connected to the frames **1** of the traveling/hoisting elements through the flange plates **4.** If, in order to be prevented from tilting and inclining but to be allowed to move in the direction of travel, the traveling/hoisting elements are held on either side not only by the traveling wheels **2** but also by corresponding elements that have not been illustrated herein, such as additional lower traveling wheels and lateral guide rollers provided on the travel rail **13,** the traverse members **14, 15** may be eliminated. The left and right traveling/hoisting elements are then only connected to the vertically movable traverse member **28.**

If the conveying capacity of a line is to be reduced at a later stage, this is also possible by removing hoisting units and modules of the vertically movable members **28** as well as, at need, traveling modules **10.** In the case of chemical methods being carried out in accordingly designed lines having several tanks for each work piece in particular, this may contribute to lower the operating costs or to reduce scrap respectively. By removing the hoisting units, it is not possible to erroneously place a work piece into a tank that is no longer in operation. Furthermore, the alteration of the conveyor systems reduces maintenance expense.

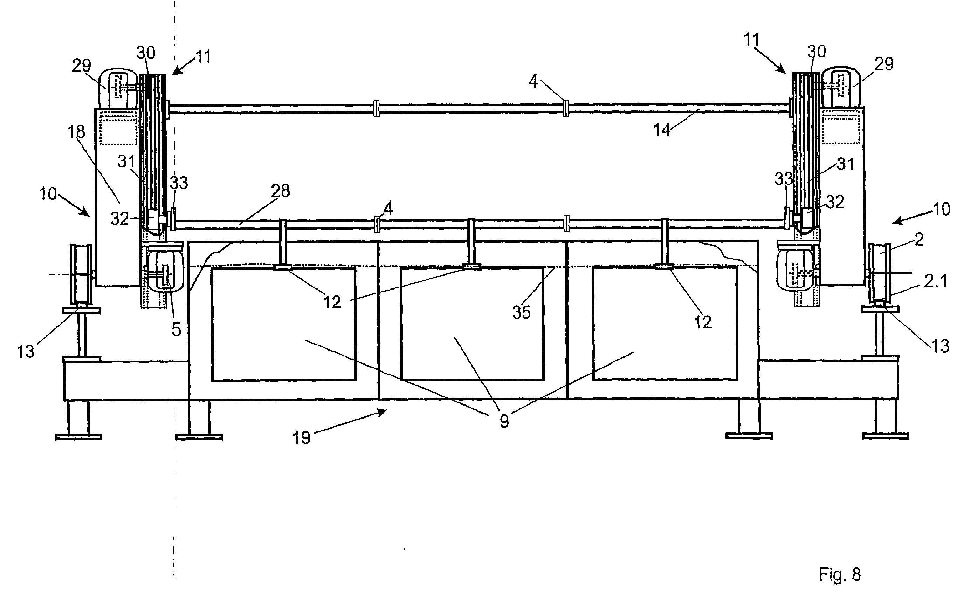

**Fig. 8** illustrates the line shown in **Fig. 7** extended by two further rows of processing stations with tanks **19.** There are three work pieces **9** in these tanks, said work pieces being held for this purpose by gripper elements **12** held on a vertically movable member **28.**

Like the vertically movable member **28** of the hoisting element **11,** the stiffening member **14** has also been lengthened by the modular dimension of the additionally provided tanks **19.** For this purpose, extension modules of the members may be incorporated. The members **14, 28** consist of member segments that are screwed together in a modular fashion by flange plates **4.**

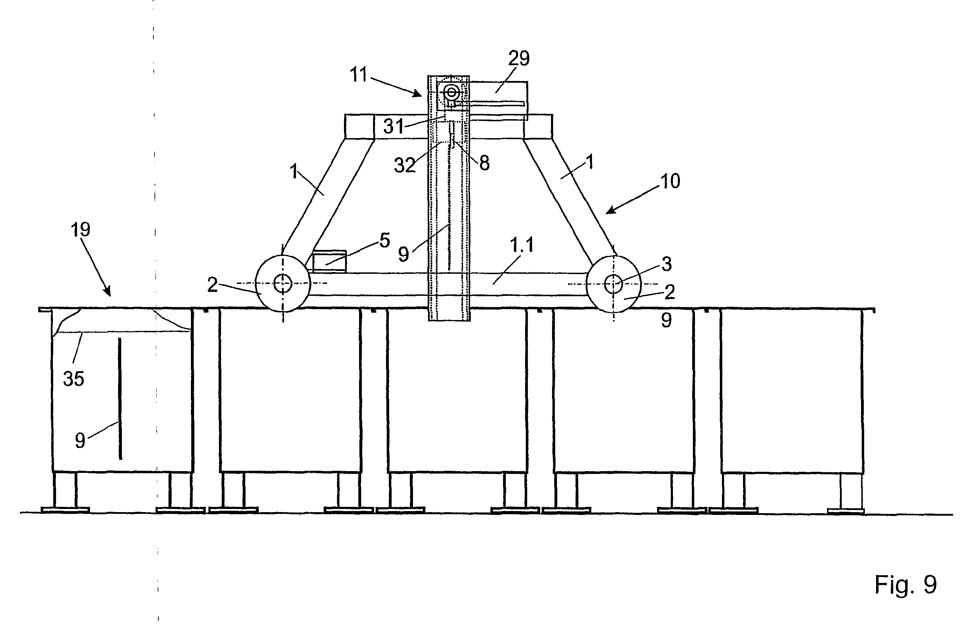

**Fig. 9** is a side view of the line shown in **Fig. 8****.** In this case, a row of processing stations can be seen. The traveling element **10** is formed by a frame **1** and travels above a row of processing tanks **19** by means of the traveling wheels **2** on a travel rail that has not been illustrated herein. The hoisting unit of the traveling element is integrated in the traveling element **10** and is denoted schematically.

A work piece **9** is placed in a first tank and is treated there in a processing liquid (liquid level **35).**

### Listing of numerals:

- **1**: supporting frame
- **1.1**: base leg of the supporting frame **1**
- **2**: traveling wheels
- **2.1**: treads of the traveling wheels **2**
- **3**: axes for traveling wheels **2**
- **4**: flange plates
- **5**: travel gear motor
- **7**: lifting cylinder
- **8**: gripper
- **9**: work piece
- **10**: traveling element
- **11**: hoisting element
- **12**: gripper element
- 13: travel rail
- **14**: upper traverse member
- **15**: lower traverse member
- **16**: connecting means
- **17**: switch cabinet
- **18**: lifting rod, lifting piston
- **19**: processing station
- **20**: gripper cylinder
- **21**: actuation rod
- **22**: clamping yoke
- **23**: clamping yoke axis
- **24**: guiding long hole on the clamping yoke **22**
- **25**: guide bolt
- **26**: guiding long hole on the-lifting rod **18**
- **27**: traveling/hoisting module
- **28**: vertically movable traverse member
- **29**: hoisting motor
- **30**: lifting spindle
- **31**: lifting belt
- **32**: guide shoe
- **33**: connection for vertically movable traverse member28
- **34**: guide rail
- **35**: liquid level

## Claims

1. A translatory manipulator for work pieces **(9)** to be processed in processing stations (19 ), comprising
a) at least one traveling element **(10)** that is moveable along a row of at least two processing stations (19) for the work pieces **(9),**
b) at least one hoisting element **(11)** as well as
c) at least one gripper element **(12)** for grasping the work pieces, mounted on the hoisting elements,
**characterized in that** the hoisting elements (11) and the gripper elements (12) are extendable in a modular fashion so that the hoisting elements (11) extend across at least two rows (arranged side by side) of processing stations (19), once the hoisting elements (11) and gripper elements (12) have been extended.

2. The manipulator according to claim 1, **characterized in that** said manipulator is configured for conveying, immersing and vertically withdrawing work pieces **(9)** in vertical dip-painting, phosphating or electroplating lines.

3. The manipulator according to any one of the preceding claims, **characterized in that** the hoisting elements **(11)** extend across at least two rows of processing stations **(19)** and that each row of processing stations is associated with at least one gripper element **(12).**

4. The manipulator according to any one of the preceding claims, **characterized in that** it comprises at least two traveling elements **(10)** built according to the same design principle.

5. The manipulator according to any one of the preceding claims, **characterized in that** at least one traveling element **(10)** is formed by a frame **(1)** with a base leg **(1.1)** as well as with at least two traveling wheels **(2)** carried on said base leg each.

6. The manipulator according to any one of the preceding claims, **characterized in that** at least one hoisting element **(11)** is formed by at least one hoisting unit held by at least one traverse member **(28)** each or by at least one traverse member held by at least one hoisting unit each.

7. The manipulator according to claim 6, **characterized in that** it comprises at least two hoisting units that are built according to the same design principle.

8. The manipulator according to claim 6 or 7, **characterized in that** at least one hoisting unit is formed by a pneumatically or hydraulically operated cylinder and piston hoisting system, a motor-operated lifting cylinder or a motor-operated lifting belt.

9. The manipulator according to any one of the preceding claims, **characterized in that** it comprises at least two gripper elements **(12)** that are built according to the same design principle.

10. The manipulator according to any one of the preceding claims, **characterized in that** at least one gripper element **(12)** is formed by two clamping yokes **(22)** grasping the work piece **(9)** each, said clamping yokes being pivotally carried on respective pivots **(23)** and being actuated by axially displacing a respective one of the legs of the clamping yokes.

11. The manipulator according to any one of the preceding claims, **characterized in that** a traveling/hoisting module **(27)** is formed by integrating a hoisting unit into a traveling element **(10).**

12. The manipulator according to any one of the preceding claims, **characterized in that** the traveling elements **(10)** are connected to the hoisting elements **(11)** by releasable connecting elements **(4).**

13. The manipulator according to any one of the preceding claims, **characterized in that** electrical leads for electrically actuating and supplying electrically operated drive units **(5)** are provided on the traveling elements **(10),** hoisting elements **(11)** and/or gripper elements **(12)** and that the electrical leads between the traveling elements, the hoisting elements and the gripper elements are connected together through releasable plug contacts.

14. The manipulator according to claim 13, **characterized in that** the plug contacts are built according to the same design principle and are each positioned at the same location on the traveling elements **(10),** hoisting elements **(11)** and gripper elements **(12).**

15. The manipulator according to claim 13 or 14, **characterized in that** the plug contacts are plugs and sockets or terminal blocks.

16. The manipulator according to any one of claims 13 to 15, **characterized in** it further comprises sensors on the processing stations **(19)** as well as controllers for the drive units **(5)** on the traveling elements **(10),** hoisting elements **(11)** and/or gripper elements **(12)** and that control signals and data are transmitted from the sensors to the controllers via a radio network.

17. The manipulator according to any one of the preceding claims, **characterized in that** it further comprises switch cabinets **(17)** and control units on the traveling elements **(10)** and that the switch cabinets and control units are built according to the same design principle and are each positioned at the same location on the traveling elements.

18. The manipulator according to any one of the preceding claims, **characterized in that** electric power is supplied to the electrically operated drive units **(5)** on the traveling elements **(10)** through sliding contacts and current collectors or through trailing cables and trailing hoses or drag chains.

19. The manipulator according to any one of the preceding claims, **characterized in that** the traveling elements **(10)** are positioned on the row of processing stations through at least one laser-based displacement measurement system.

20. A processing line comprising
a) at least one row of processing stations **(19)** and
b) at least one translatory manipulator, **characterized in that** the manipulator is according to any one of claims 1 to 19 and extends across the rows of stations.

21. The processing line according to claim 20, **characterized in that** the processing stations **(19)** have substantially the same size as the work pieces **(9).**

22. The processing line according to claim 20 or 21, **characterized in that** it further comprises racks for holding the work pieces **(9)** which are disposed in the processing stations **(19).**

23. The processing line according to any one of claims 20 to 22, **characterized in that** it further comprises sensors for detecting respective operating conditions in the processing stations, said sensors being associated with said processing stations **(19).**

24. The processing line according to claim 23, **characterized in that** the sensors are configured to be measuring sensors for determining a respective one of the parameters selected from a group comprising
a) the temperature of processing medium contained in the processing stations **(19),**
b) the flow velocity of the processing medium contained in the processing stations,
c) the electric current density between a work piece **(9)** placed in a processing station and counter-electrodes also placed in the processing station,
d) the fill level of the processing medium contained in the processing stations and
e) the concentration of chemical compounds contained in the processing medium contained in the processing stations.

25. A method of processing work pieces comprising the following method steps:
a) successively supplying the work pieces **(9)** to processing stations **(19)** in a row of processing stations and
b) contacting the work pieces with processing medium in a respective one of the processing stations,
**characterized in that**
c) there are provided at least the rows of processing stations and that a translatory manipulator according to any one of claims 1 to 19 is used for successively supplying the work pieces to the processing stations.

## Patentansprüche

1. Translatorischer Manipulator für in Behandlungsstationen (10) zu behandelnde Werkstücke (9), umfassend
a) mindestens ein Fahrelement (10), das längs einer Reihe von mindestens zwei Behandlungsstationen (19) für die Werkstücke verfahrbar ist,
b) mindestens ein Hubelement (11) sowie
c) mindestens ein an den Hubelementen angebrachtes Greifelement (12) zum Greifen der Werkstücke,
**dadurch gekennzeichnet, dass** die Hubelemente (11) und die Greifelemente (12) modulartig erweiterbar sind, so dass sich die Hubelemente (11) quer über mindestens zwei (nebeneinander angeordnete) Reihen von Behandlungsstationen (19) erstrecken, sobald die Hubelemente (11) und die Greifelemente (12) erweitert sind.

2. Manipulator nach Anspruch 1, **dadurch gekennzeichnet, dass** der Manipulator zur Beförderung, zum Einsenken und zum vertikalen Ausheben von Werkstücken (9) in vertikalen Tauchlackier-, Phosphatier- oder Galvanisieranlagen ausgebildet ist.

3. Manipulator nach einem der vorstehenden Ansprüche, **dadurch gekennzeichnet, dass** sich die Hubelemente (11) quer über mindestens zwei Reihen von Behandlungsstationen (19) erstrecken und dass jeder Reihe von Behandlungsstationen mindestens ein Greifelement (12) zugeordnet ist.

4. Manipulator nach einem der vorstehenden Ansprüche, **dadurch gekennzeichnet, dass** er mindestens zwei nach demselben Aufbauprinzip aufgebaute Fahrelemente (10) aufweist.

5. Manipulator nach einem der vorstehenden Ansprüche, **dadurch gekennzeichnet, dass** mindestens ein Fahrelement (10) durch einen Rahmen (1) mit einem Basisschenkel (1.1) sowie mit mindestens zwei jeweils am Basisschenkel gehaltenen Laufrädern (2) gebildet ist.

6. Manipulator nach einem der vorstehenden Ansprüche, **dadurch gekennzeichnet, dass** mindestens ein Hubelement (11) durch mindestens ein von jeweils mindestens einer Quertraverse (28) gehaltenes Hubwerk oder durch mindestens eine von jeweils mindestens einem Hubwerk gehaltene Quertraverse gebildet wird.

7. Manipulator nach Anspruch 6, **dadurch gekennzeichnet, dass** er mindestens zwei nach demselben Aufbauprinzip aufgebaute Hubwerke aufweist.

8. Manipulator nach Anspruch 6 oder 7, **dadurch gekennzeichnet, dass** mindestens ein Hubwerk durch ein pneumatisch oder hydraulisch betriebenes ZylinderKolben-Hubsystem, einen motorisch betriebenen Hubzylinder oder ein motorisch betriebenes Hubband gebildet ist.

9. Manipulator nach einem der vorstehenden Ansprüche, **dadurch gekennzeichnet, dass** er mindestens zwei nach demselben Aufbauprinzip aufgebaute Greifelemente (12) aufweist.

10. Manipulator nach einem der vorstehenden Ansprüche, **dadurch gekennzeichnet, dass** mindestens ein Greifelement (12) durch zwei jeweils das Werkstück (9) greifende Klemmbügel (22) gebildet ist, die über jeweilige Drehpunkte (23) schwenkbar gelagert sind und durch axiale Verschiebung jeweils eines Schenkels der Klemmbügel betätigt werden.

11. Manipulator nach einem der vorstehenden Ansprüche, **dadurch gekennzeichnet, dass** ein Fahr-/Hubmodul (27) durch Integration eines Hubwerkes in ein Fahrelement (10) gebildet ist.

12. Manipulator nach einem der vorstehenden Ansprüche, **dadurch gekennzeichnet, dass** die Fahrelemente (10) über lösbare Verbindungselemente (4) mit den Hubelementen (11) verbunden sind.

13. Manipulator nach einem der vorstehenden Ansprüche, **dadurch gekennzeichnet, dass** an den Fahrelementen (10), Hubelementen (11) und/oder Greifelementen (12) elektrische Leitungen zur elektrischen Ansteuerung und Versorgung von elektrisch betriebenen Antriebseinheiten (5) vorgesehen sind und dass die elektrischen Leitungen zwischen den Fahrelementen, Hubelementen und Greifelementen über lösbare Steckkontakte miteinander verbunden sind.

14. Manipulator nach Anspruch 13, **dadurch gekennzeichnet, dass** die Steckkontakte nach demselben Aufbauprinzip aufgebaut und an jeweils gleicher Stelle an den Fahrelementen (10), Hubelementen (11) und Greifelementen (12) platziert sind.

15. Manipulator nach Anspruch 13 oder 14, **dadurch gekennzeichnet, dass** die Steckkontakte Stecker und Steckdosen oder Klemmleisten sind.

16. Manipulator nach einem der Ansprüche 13 - 15, **dadurch gekennzeichnet, dass** er weiterhin Sensoren an den Behandlungsstationen (19) sowie Steuerungen für die Antriebseinheiten (5) an den Fahrelementen (10), Hubelementen (11) und/oder Greifelementen (12) aufweist und dass Steuersignale sowie Daten von den Sensoren über ein Funknetz an die Steuerungen übertragen werden.

17. Manipulator nach einem der vorstehenden Ansprüche, **dadurch gekennzeichnet, dass** er weiterhin an den Fahrelementen (10) Schaltkästen (17) und Schaltgeräte aufweist und dass die Schaltkästen und Schaltgeräte nach demselben Aufbauprinzip aufgebaut und an jeweils gleicher Stelle an den Fahrelementen platziert sind.

18. Manipulator nach einem der vorstehenden Ansprüche, **dadurch gekennzeichnet, dass** den elektrisch betriebenen Antriebseinheiten (5) an den Fahrelementen (10) elektrische Leistung über Schleifschienen und Stromabnehmer oder über Schleppkabel und Schleppschläuche oder Schleppketten zugeführt wird.

19. Manipulator nach einem der vorstehenden Ansprüche, **dadurch gekennzeichnet, dass** die Fahrelemente (10) über mindestens ein Laser-Wegmesssystem an der Reihe von Behandlungsstationen positioniert sind.

20. Behandlungsanlage, umfassend
a) mindestens eine Reihe von Behandlungsstationen (19) und
b) mindestens einen translatorischen Manipulator, **dadurch gekennzeichnet, dass** es sich um den Manipulator nach einem der Ansprüche 1-19 handelt und dass sich dieser quer über die Reihen von Stationen erstreckt.

21. Behandlungsanlage nach Anspruch 20, **dadurch gekennzeichnet, dass** die Behandlungsstationen (19) im Wesentlichen dieselbe Größe wie die Werkstücke (9) haben.

22. Behandlungsanlage nach Anspruch 20 oder 21, **dadurch gekennzeichnet, dass** sie weiterhin Gestelle zur Halterung der Werkstücke (9), die in den Behandlungsstationen (19) angeordnet sind, umfassen.

23. Behandlungsanlage nach einem der Ansprüche 20 - 22, **dadurch gekennzeichnet, dass** sie weiterhin Sensoren zum Detektieren von jeweiligen Betriebszuständen in den Behandlungsstationen umfasst, wobei die Sensoren den Behandlungsstationen (19) zugeordnet sind.

24. Behandlungsanlage nach Anspruch 23, **dadurch gekennzeichnet, dass** die Sensoren als Messfühler zur Ermittlung jeweils eines Parameters ausgebildet sind, der ausgewählt ist aus einer Gruppe, umfassend
a) die Temperatur von in den Behandlungsstationen (19) enthaltenem Behandlungsmedium,
b) die Strömungsgeschwindigkeit des in den Behandlungsstationen enthaltenen Behandlungsmediums,
c) die elektrische Stromdichte zwischen einem in einer Behandlungsstation befindlichen Werkstück (9) und ebenfalls in der Behandlungsstation befindlichen Gegenelektroden,
d) den Füllstand des in den Behandlungsstationen enthaltenen Behandlungsmediums und
e) die Konzentration von chemischen Verbindungen in dem sich in den Behandlungsstationen befindenden Behandlungsmedium.

25. Verfahren zum Behandeln von Werkstücken, umfassend die folgenden Verfahrensschritte:
a) Sukzessives Zuführen der Werkstücke (9) zu Behandlungsstationen (19) in einer Reihe von Behandlungsstationen und
b) In-Kontakt-Bringen der Werkstücke mit Behandlungsmedium in jeweils einer der Behandlungsstationen,
**dadurch gekennzeichnet, dass**
mindestens zwei Reihen von Behandlungsstationen vorgesehen sind und dass zum sukzessiven Zuführen der Werkstücke zu den Behandlungsstationen ein translatorischer Manipulator nach einem der Ansprüche 1-19 vorgesehen ist.

## Revendications

1. Manipulateur translatoire pour pièces à usiner (9) destinées à être traitées dans des postes de traitement (19), comprenant :
a) au moins un élément mobile (10) qui est mobile le long d'une rangée d'au moins deux postes de traitement (19) pour les pièces à usiner (9),
b) au moins un élément de levage (11) ainsi que
c) au moins un élément de préhension (12) pour saisir les pièces à usiner, monté sur les éléments de levage,
**caractérisé en ce que** les éléments de levage (11) et les éléments de préhension (12) sont extensible de façon modulaire de sorte que les éléments de levage (11) s'étendent sur au moins deux rangées (agencées côte à côte) de postes de traitement (19), une fois que les éléments de levage (11) et éléments de préhension (12) ont été étendus.

2. Manipulateur selon la revendication 1, **caractérisé en ce que** ledit manipulateur est configuré pour transporter, immerger et retirer verticalement des pièces à usiner (9) dans des chaînes verticales de peinture par immersion, de phosphatation ou de dépôt électrolytique.

3. Manipulateur selon l'une quelconque des revendications précédentes, **caractérisé en ce que** les éléments de levage (11) s'étendent sur au moins deux rangées de postes de traitement (19) et que chaque rangée de postes de traitement est associée à au moins un élément de préhension (12).

4. Manipulateur selon l'une quelconque des revendications précédentes, **caractérisé en ce qu'**il comprend au moins deux éléments mobiles (10) construits selon le même principe de conception.

5. Manipulateur selon l'une quelconque des revendications précédentes, **caractérisé en ce qu'**au moins un élément mobile (10) est formé par un cadre (1) avec un pied de base (1,1) ainsi qu'avec au moins deux roues mobiles (2) chacune supportées sur ledit pied de base.

6. Manipulateur selon l'une quelconque des revendications précédentes, **caractérisé en ce qu'**au moins un élément de levage (11) est formé par au moins une unité de levage, chacune retenue par au moins un élément transversal (28), ou par au moins un élément transversal, chacun retenu par au moins une unité de levage.

7. Manipulateur selon la revendication 6, **caractérisé en ce qu'**il comprend au moins deux unités de levage qui sont construites selon le même principe de conception.

8. Manipulateur selon la revendication 6 ou 7, **caractérisé en ce qu'**au moins une unité de levage est formée par un système de levage à vérin et piston à commande pneumatique ou hydraulique, un vérin de levage motorisé ou une courroie de levage motorisée.

9. Manipulateur selon l'une quelconque des revendications précédentes, **caractérisé en ce qu'**il comprend au moins deux éléments de préhension (12) qui sont construits selon le même principe de conception.

10. Manipulateur selon l'une quelconque des revendications précédentes, **caractérisé en ce qu'**au moins un élément de préhension (12) est formé par deux fourches de serrage (22), chacune saisissant la pièce à usiner (9), lesdites fourches de serrage étant supportées de façon pivotante sur des pivots respectifs (23) et étant actionnées en déplaçant de façon axiale un pied respectif des pieds des fourches de serrage.

11. Manipulateur selon l'une quelconque des revendications précédentes, **caractérisé en ce qu'**un module mobile/de levage (27) est formé en intégrant une unité de levage dans un élément mobile (10).

12. Manipulateur selon l'une quelconque des revendications précédentes, **caractérisé en ce que** les éléments mobiles (10) sont reliés aux éléments de levage (11) par des éléments de liaison démontables (4).

13. Manipulateur selon l'une quelconque des revendications précédentes, **caractérisé en ce que** des fils électriques pour actionner et alimenter électriquement des unités d'entraînement à commande électrique (5) sont prévus sur les éléments mobiles (10), les éléments de levage (11) et/ou les éléments de préhension (12) et que les fils électriques entre les éléments mobiles, les éléments de levage et les éléments de préhension sont connectés les uns aux autres par l'intermédiaire de contacts à fiche démontables.

14. Manipulateur selon la revendication 13, **caractérisé en ce que** les contacts à fiche sont construits selon le même principe de conception et sont chacun positionnés dans le même emplacement sur les éléments mobiles (10), les éléments de levage (11) et les éléments de préhension (12).

15. Manipulateur selon la revendication 13 ou 14, **caractérisé en ce que** les contacts à fiche sont des fiches et douilles ou des plaques à bornes.

16. Manipulateur selon l'une quelconque des revendications 13 à 15, **caractérisé en ce qu'**il comprend en outre des capteurs sur les postes de traitement (19) ainsi que des dispositifs de commande pour les unités d'entraînement (5) sur les éléments mobiles (10), les éléments de levage (11) et/ou les éléments de préhension (12) et que des signaux et données de commande sont transmis des capteurs aux dispositifs de commande par l'intermédiaire d'un réseau radio.

17. Manipulateur selon l'une quelconque des revendications précédentes, **caractérisé en ce qu'**il comprend en outre des armoires de commande (17) et des unités de commande sur les éléments mobiles (10) et que les armoires de commande et les unités de commande sont construites selon le même principe de conception et sont chacune positionnées dans le même emplacement sur les éléments mobiles.

18. Manipulateur selon l'une quelconque des revendications précédentes, **caractérisé en ce que** de l'énergie électrique est fournie aux unités d'entraînement à commande électrique (5) sur les éléments mobiles (10) par l'intermédiaire de contacts coulissants et collecteurs de courant ou par l'intermédiaire de câbles traînants et flexibles traînants ou chaînes de traînage.

19. Manipulateur selon l'une quelconque des revendications précédentes, **caractérisé en ce que** les éléments mobiles (10) sont positionnés sur la rangée de postes de traitement par l'intermédiaire d'au moins un système de mesure de déplacement laser.

20. Chaîne de traitement comprenant :
a) au moins une rangée de postes de traitement (19) et
b) au moins un manipulateur translatoire, **caractérisée en ce que** le manipulateur est selon l'une quelconque des revendications 1 à 19 et s'étend sur les rangées de stations.

21. Chaîne de traitement selon la revendication 20, **caractérisée en ce que** les postes de traitement (19) possèdent sensiblement la même taille que les pièces à usiner (9).

22. Chaîne de traitement selon la revendication 20 ou 21, **caractérisée en ce qu'**elle comprend en outre des crémaillères pour retenir les pièces à usiner (9) qui sont disposées dans les postes de traitement (19).

23. Chaîne de traitement selon l'une quelconque des revendications 20 à 22, **caractérisée en ce qu'**elle comprend en outre des capteurs pour détecter des conditions de fonctionnement respectives dans les postes de traitement, lesdits capteurs étant associés auxdits postes de traitement (19).

24. Chaîne de traitement selon la revendication 23, **caractérisée en ce que** les capteurs sont configurés pour être des capteurs pour déterminer un paramètre respectif des paramètres sélectionnés parmi un groupe comprenant :
a) la température de matériau de traitement contenu dans les postes de traitement (19),
b) la vitesse d'écoulement du matériau de traitement contenu dans les postes de traitement,
c) la densité de courant électrique entre une pièce à usiner (9) placée dans un poste de traitement et des contre-électrodes également placées dans le poste de traitement,
d) le niveau de remplissage du matériau de traitement contenu dans les postes de traitement, et
e) la concentration de composés chimiques contenus dans le matériau de traitement contenu dans les postes de traitement.

25. Procédé de traitement de pièces à usiner comprenant les étapes de procédé suivantes comprenant :
a) fournir successivement les pièces à usiner (9) aux postes de traitement (19) dans une rangée de postes de traitement, et
b) mettre les pièces à usiner en contact avec le matériau de traitement dans un poste respectif des postes de traitement,
**caractérisé en ce que**
c) au moins deux rangées de postes de traitement sont prévues et qu'un manipulateur translatoire selon l'une quelconque des revendications 1 à 19 est utilisé pour fournir successivement les pièces à usiner aux postes de traitement.
